# DEMANDE DE BREVET EUROPEEN

(11) **EP 3 342 282 A1**
(43) Date de publication de la demande: **04.07.2018**
(21) Numéro de dépôt: 16306854.7
(22) Date de dépôt: 30.12.2016
(51) Int. Cl.: A01K 63/04, A01G 31/00

(54) **DISPOSITIF DE FILTRATION POUR SYSTÈME DE PRODUCTION AQUAPONIQUE**

(71) Demandeur: MYFOOD FRANCE, 67140 Gertwiller (FR)
(72) Inventeur: URBAN, Matthieu, 67140 Gertwiller (FR); MORGAN ROTHSCHILD, Kevin, 93100 Montreuil (FR)
(74) Mandataire: Merckling, Norbert

(57) **Abrégé**

Le corps du dispositif de filtration (1) est un cylindre creux à face supérieure ouverte et à face inférieure fermée. Il renferme une matière filtrante (23) logée dans le corps cylindrique (22) le long de sa face périphérique interne (30) et prévue pour retenir les déchets solides (10). Il comprend une alimentation (24) prévue latéralement dans sa partie inférieure pour l'arrivée du liquide à filtrer (5) et une évacuation (17) prévue latéralement dans sa partie médiane pour la sortie du liquide filtré (6). Un insert cylindrique (31) creux à face inférieure ouverte est positionné de manière amovible dans le corps cylindrique pour plaquer la matière filtrante contre la face périphérique interne (30) du corps cylindrique par sa face périphérique externe. L'alimentation est reliée à une conduite étanche qui pénètre à l'intérieur du corps cylindrique et de l'insert cylindrique pour déboucher en partie supérieure dudit corps cylindrique.

## Description

### Domaine technique

La présente invention se rapporte à un dispositif de filtration prévu pour être immergé dans un liquide à filtrer.

L'invention concerne plus particulièrement un dispositif de filtration pour un système de production aquaponique comprenant un bassin, ledit dispositif de filtration étant immergé dans le bassin pour y éliminer les déchets solides provenant des poissons.

### Etat de la technique

L'aquaponie est une technique qui combine à la fois l'aquaculture, consistant en un élevage de poissons et d'autres organismes aquatiques, et l'hydroponie qui consiste en une culture hors-sol de plantes grâce à de l'eau enrichie en matières minérales. Alors que l'aquaculture génère habituellement des déchets qui souillent l'eau des bassins dans lesquels évoluent les poissons, l'utilisation de cette même eau en hydroponie, après filtration des matières solides, permet astucieusement d'utiliser l'eau souillée pour nourrir des plantes.

Ainsi, non seulement cette technique permet simultanément d'obtenir une source de viande, de fruits et de légumes pour nourrir la population, mais elle permet en outre de valoriser des rejets d'origine biologique afin de minimiser l'impact environnemental de l'aquaculture.

Les systèmes aquaponiques traditionnels comprennent habituellement des bassins dans lesquels des poissons sont élevés et d'où l'eau s'écoule par gravité pour être filtrée dans des dispositifs de filtration externe pour les matières solides avant d'être pompée vers une installation hydroponique afin d'en irriguer les plantes. Les dispositifs de filtration utilisés sont notamment nécessaires pour éliminer les déchets solides qui pourraient contaminer les poissons, pour protéger la pompe et pour éviter que les conduites et le système d'irrigation ne se bouchent.

Ces dispositifs de filtration nécessitent généralement des bassins supplémentaires qui sont souvent sujets à des fuites et nécessitent de fréquentes réparations. Ils nécessitent également plusieurs pompes, ce qui augmente la consommation électrique et le risque d'avoir des défauts de niveau avec une pompe qui se retrouve à sec ou un bassin qui déborde. Ces systèmes à bassins multiples sont donc onéreux, complexes et nécessitent une maintenance constante. Ils ne sont donc pas adaptés au marché grand public.

A titre d'exemple par le brevet US 2015/0060340 A1 on connaît un filtre intégré dans un système aquaponique de bureau associé à une plante verte et qui comprend un dispositif de filtration. Ce dispositif de filtration ne permet pas d'éliminer facilement les déchets solides ce qui provoque notamment une augmentation du taux d'ammoniaque dans l'eau qui peut devenir mortel pour les poissons. En outre, le dispositif de filtration du brevet US 2015/0060340 A1 n'est pas très performant, et en cas de mauvaise filtration il y a un risque de bouchage des systèmes d'irrigation supérieurs.

Dans le domaine de l'aquaponie, il existe donc un besoin pour un dispositif de filtration qui permette d'éliminer facilement et de manière efficace les déchets solides.

### Description de l'invention

L'objet de la présente invention vise par conséquent à pallier les inconvénients de l'art antérieur en proposant un nouveau dispositif de filtration simple et efficace qui permette d'éliminer facilement les déchets solides et qui ne favorise pas l'accumulation de l'ammoniaque dans l'eau.

Un autre objet de la présente invention vise à proposer un nouveau système de production aquaponique comportant au moins un nouveau dispositif de filtration selon l'invention.

Les objets assignés à l'invention sont atteints à l'aide d'un dispositif de filtration prévu pour être partiellement immergé dans un bassin rempli de liquide afin de filtrer ce liquide pour en éliminer les déchets solides, le corps dudit dispositif de filtration renfermant une matière filtrante prévue pour retenir les déchets solides, et ledit dispositif de filtration comprenant une alimentation pour l'arrivée du liquide à filtrer et une évacuation pour la sortie du liquide une fois celui-ci filtré, caractérisé en ce que :
- le corps dudit dispositif de filtration est sous la forme d'un cylindre creux à face supérieure ouverte et à face inférieure fermée formant le fond dudit corps cylindrique ;
- l'alimentation est agencée latéralement dans la partie inférieure du corps cylindrique ;
- l'évacuation est agencée latéralement dans la partie médiane du corps cylindrique ;
- un insert cylindrique creux à face inférieure ouverte est positionné de manière amovible dans le corps cylindrique pour plaquer la matière filtrante contre la face périphérique interne dudit corps cylindrique par la face périphérique externe de l'insert cylindrique ; et
- l'alimentation est reliée à une conduite étanche qui pénètre à l'intérieur du corps cylindrique et de l'insert cylindrique creux pour déboucher en partie supérieure dudit corps cylindrique.

Ce dispositif de filtration permet une filtration radiale particulièrement efficace, les déchets solides retenus peuvent facilement être retirés par le dessus après avoir dégagé l'insert cylindrique creux. Les moyens constitutifs présentent des formes simples qui sont facile à produire. Ils peuvent être en matière plastique, préférentiellement en matière plastique compatible avec le contact alimentaire, ce qui permet de produire un dispositif de filtration efficace à faible coût.

Selon un exemple de mise en oeuvre de l'invention, l'évacuation est équipée d'une grille prévue entre la matière filtrante et le corps cylindrique. Ceci permet d'éviter que la matière filtrante ne soit aspirée au niveau de l'évacuation.

Selon un autre exemple de mise en oeuvre de l'invention, le dispositif de filtration comprend un organe d'écartement pour maintenir la grille à distance de la face périphérique interne du corps cylindrique. Ainsi, un espace est dégagé pour l'introduction éventuelle de l'extrémité d'une conduite dans le dispositif de filtration au niveau de l'évacuation, de sorte que la grille et la matière filtrante ne soit pas détériorées par la présence et l'introduction de ladite conduite.

Selon un exemple supplémentaire de mise en oeuvre de l'invention, le corps cylindrique dudit dispositif de filtration est équipé en partie supérieure par un couvercle monté de manière amovible sur la face supérieure ouverte du corps cylindrique et présentant au moins un évent, l'insert cylindrique creux étant fixé en sous-face dudit couvercle. Ce couvercle permet avantageusement de protéger les moyens prévus à l'intérieur du dispositif de filtration, tout en permettant à l'air d'entrer et sortir pour un équilibrage des pressions à l'intérieur du dispositif de filtration. En outre, ce couvercle permet avantageusement de positionner l'insert cylindrique creux à l'intérieur du corps cylindrique du dispositif de filtration.

Selon un exemple de mise en oeuvre de l'invention, l'alimentation et l'évacuation sont équipées chacune d'un connecteur rapide et étanche pour raccorder des conduites de manière amovible au dispositif de filtration. Ceci permet de raccorder facilement et rapidement le dispositif de filtration aux conduites d'une installation dont l'eau doit être filtrée.

Selon un autre exemple de mise en oeuvre de l'invention, le corps cylindrique comporte des ventouses sur sa face inférieure fermée et/ou sur sa face périphérique externe. Ceci permet avantageusement de fixer le dispositif de filtration au fond du bassin d'aquaculture et/ou sur les parois latérales de celui-ci afin d'éviter qu'il ne flotte quand le niveau d'eau baisse.

Selon un exemple supplémentaire de mise en oeuvre de l'invention, la matière filtrante est sous la forme d'une masse de matière filtrante logée dans le corps cylindrique du dispositif de filtration le long de la face périphérique interne dudit corps cylindrique. Préférentiellement, la matière filtrante est sous la forme d'une bande de masse de matière filtrante qui est roulée sur elle-même sur un ou plusieurs tours de manière à former un cylindre. Ainsi, cette masse de matière filtrante peut être achetée en rouleaux de grandes dimensions à faible coût pour être coupée en bandes aux dimensions voulue. De même, prévoir la matière filtrante sous la forme d'une bande de masse de matière filtrante roulée sur elle-même permet de fournir une matière filtrante facile à mettre en place et à retirer en cas de maintenance.

Selon un exemple de mise en oeuvre de l'invention, la bande de matière filtrante présente une épaisseur comprise entre 0,5 et 20 centimètres, préférentiellement comprise entre 2 et 10 centimètres et plus préférentiellement comprise entre 4 et 6 centimètres.

Selon un autre exemple de mise en oeuvre de l'invention, la matière filtrante est de la mousse filtrante à maille fine en polyéthylène haute densité (PEHD).

Les objets assignés à l'invention sont également atteints à l'aide d'un système de production aquaponique comprenant un bassin d'aquaculture et une installation hydroponique, caractérisé en ce qu'il comprend au moins un dispositif de filtration tel que défini précédemment prévu pour filtrer de l'eau souillée du bassin d'aquaculture et irriguer l'installation hydroponique avec de l'eau filtrée au moyen d'un système de circulation d'eau comprenant une pompe.

Un tel système de production aquaponique, grâce à un dispositif de filtration peu onéreux et performant permet d'éliminer facilement les déchets solides, sans favoriser pas l'accumulation d'ammoniaque dans l'eau des bassins d'aquaculture.

Selon un exemple de mise en oeuvre de l'invention, le dispositif de filtration est fixé et immergé au fond du bassin d'aquaculture, ce qui permet avantageusement de le maintenir en place et d'éviter notamment qu'il ne flotte.

Selon un autre exemple de mise en oeuvre de l'invention, le dispositif de filtration est immergé dans le bassin d'aquaculture de sorte que le niveau supérieur de l'eau dudit bassin soit maintenu entre la face supérieure ouverte du corps cylindrique et l'évacuation. Cette immersion, associée à la configuration spécifique du dispositif de filtration, permet de filtrer efficacement l'eau qui est fournie au dispositif de filtration. Elle permet également de loger le dispositif de filtration dans le bassin d'aquaculture afin de ne pas gêner la circulation des personnes au sein du système de production aquaponique.

Selon un exemple supplémentaire de mise en oeuvre de l'invention, le système de production aquaponique comporte un réseau de conduites d'aspiration perforées disposées dans le fond du bassin d'aquaculture et raccordé à l'alimentation du dispositif de filtration, les perforations desdites conduites étant de taille suffisante pour laisser passer les déchets solides que le dispositif de filtration doit retenir. Ce réseau de conduites perforées constitue un moyen peu onéreux et efficace pour éliminer les déchets solides du bassin d'aquaculture.

Selon un exemple de mise en oeuvre de l'invention, le réseau de conduites d'aspiration perforées est équipé d'une conduite verticale en communication fluidique avec ledit réseau et dont l'extrémité libre est ouverte et débouche au-dessus du niveau de l'eau du bassin d'aquaculture. Cette conduite verticale permet de mettre le réseau de conduites perforées à la même pression que celle du dispositif de filtration afin de favoriser le bon fonctionnement de celui-ci, qui repose notamment sur le principe des vases communicants.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue d'ensemble en perspective d'un système de production aquaponique selon l'invention ;
- la figure 2 est une vue d'ensemble en éclatée et en perspective d'un système de production aquaponique selon l'invention dans lequel seul un nombre réduit d'éléments de l'installation hydroponique sont représenté pour plus de clarté ;
- la figure 3 est une vue d'ensemble en perspective d'un dispositif de filtration selon l'invention ;
- la figure 4 est une vue d'ensemble en perspective de dessus d'un dispositif de filtration selon l'invention dans lequel le couvercle et l'insert ont été retirés pour plus de clarté ;
- la figure 5 est une vue en coupe verticale d'un dispositif de filtration selon l'invention selon l'axe de coupe V-V représenté sur la figure 4 ; et
- la figure 6 est une vue en coupe verticale d'un dispositif de filtration selon l'invention selon l'axe de coupe VI-VI représenté sur la figure 4.

Il doit notamment être noté que le système de production aquaponique représenté sur les figures est une version simplifiée de l'invention et ne traduit pas nécessairement le système de production aquaponique réel. Il est évident pour l'homme du métier que les moyens représentés peuvent notamment être prévus en plus grands nombres, et/ou avec des dimensions différentes de celles représentées.

### Mode(s) de réalisation de l'invention

Les éléments structurellement et fonctionnellement identiques présents sur plusieurs figures distinctes, sont affectés d'une même référence numérique ou alphanumérique.

Le dispositif de filtration (1) selon l'invention prévu pour être partiellement immergé dans un bassin rempli de liquide afin de filtrer ce liquide pour en éliminer les déchets solides. Ce liquide est généralement de l'eau.

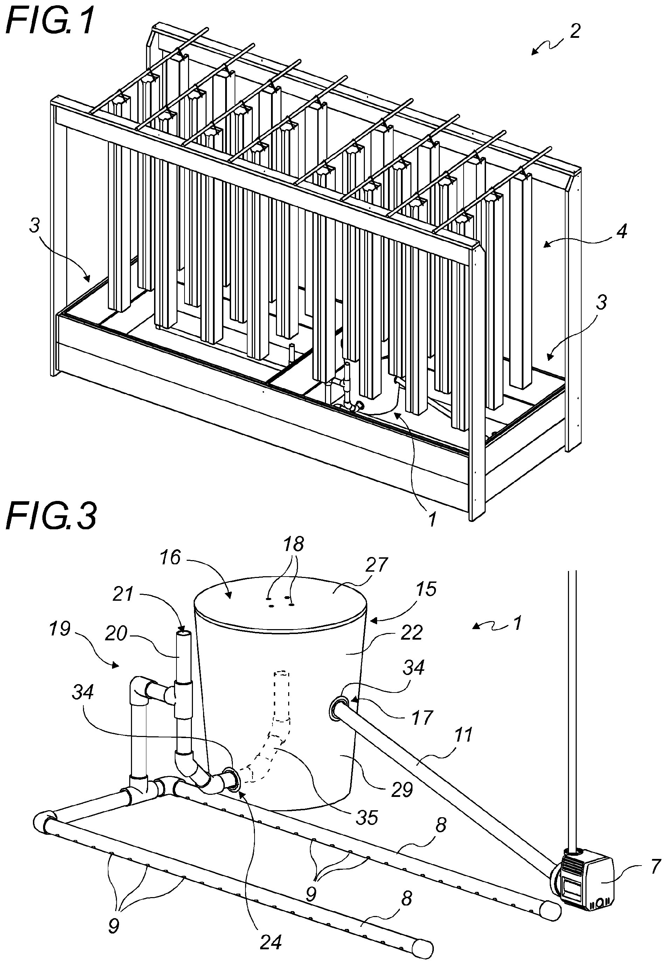

En effet, le dispositif de filtration (1) selon l'invention est préférentiellement prévu pour être utilisé au sein d'un système de production aquaponique (2) tel que représenté à titre d'exemple sur les figures 1 et 2 et faisant également l'objet de l'invention. Un tel système de production aquaponique (2) comprend habituellement au moins un bassin d'aquaculture (3) et au moins une installation hydroponique (4), par exemple verticale. Le dispositif de filtration (1) de l'invention est alors prévu pour filtrer l'eau souillée (5) du bassin d'aquaculture (3) et irriguer l'installation hydroponique (4) avec l'eau filtrée (6) au moyen d'un système de circulation d'eau comprenant une pompe (7).

Dans ce but, le système de production aquaponique (2) comprend un réseau de conduites d'aspiration (8) perforées disposées dans le fond du bassin d'aquaculture (3). L'eau souillée (5) des bassins d'aquaculture (3) est alors aspirée par un système de circulation d'eau comprenant une pompe (7) au niveau des perforations (9) desdites conduites d'aspiration (8) pour être envoyée vers le dispositif de filtration (1) de l'invention. Les déchets solides (10) sont alors éliminés par le dispositif de filtration (1) et l'eau filtrée (6) est ensuite dirigée par une conduite d'évacuation (11) vers l'installation hydroponique (4) afin d'alimenter un dispositif d'irrigation (12) qui alimente en eau filtrée (6) les plantes (13) qui y poussent, le plus généralement des fruits et/ou des légumes.

Les perforations (9) des conduites d'aspiration (8) sont de taille suffisante pour laisser passer les déchets solides (10) que le dispositif de filtration (1) doit retenir. A titre d'exemple lesdites perforations (9) peuvent présenter un diamètre d'environ 1 centimètre et être espacées de 5 cm. Elles sont préférentiellement prévues en sous-face des conduites d'aspiration (8).

Le dispositif de filtration (1) est préférentiellement est fixé au fond (14) du bassin d'aquaculture (3), et immergé dans celui-ci de sorte que la partie supérieure (15) du dispositif de filtration (1) soit à l'air libre. De préférence, le dispositif de filtration (1) est immergé dans le bassin d'aquaculture (3) de sorte que le niveau supérieur de l'eau dudit bassin soit situé entre la face supérieure (16) du dispositif de filtration (1) et son évacuation (17).

La partie supérieure (15) du dispositif de filtration (1) est au moins partiellement ouverte, équipée d'un évent ou présentant de simple trous (18) de sorte que la pression à l'intérieur du dispositif de filtration (1) puisse s'équilibrer avec l'air ambiant.

De même, le réseau de conduites d'aspiration (8) perforées est préférentiellement équipé avec un dispositif d'égalisation des pressions (19). Ce dispositif d'égalisation des pressions (19) peut être sous la forme d'une conduite verticale (20) en communication fluidique avec ledit réseau de conduites d'aspiration (8) et dont l'extrémité libre (21) est ouverte et débouche au-dessus du niveau de l'eau du bassin d'aquaculture (3).

L'égalisation des pressions dans le dispositif de filtration (1) et dans le réseau de conduites d'aspiration (8) perforées permet avantageusement de favoriser le principe de vases communicants qui s'établit entre le dispositif de filtration (1) et le réseau de conduites d'aspiration (8) perforées.

C'est grâce à ce principe que l'eau dans le dispositif de filtration (1) est au même niveau que l'eau du bassin d'aquaculture (3) dans lequel il est immergé.

En outre, sans le dispositif d'égalisation des pressions (19), l'eau pourrait ne pas remonter pas assez vite dans la conduite étanche (35) qui pénètre dans le corps (22) du dispositif de filtration (1) lorsque la pompe (7) du système de circulation d'eau fonctionne en aspiration.

L'eau filtrée (6) dans le dispositif de filtration (1) est envoyée en irrigation dans les tours de culture de l'installation hydroponique (4), puis l'eau retombe dans les bassins d'aquaculture (3), faisant monter le niveau d'eau. Ainsi, les niveaux de liquide doivent s'équilibrer entre les bassins d'aquaculture (3) et l'intérieur du dispositif de filtration (1). Cet équilibrage des niveaux est obtenu grâce au dispositif d'égalisation des pressions (19) avec l'eau qui circule à partir conduites d'aspiration (8) jusqu'au dispositif de filtration (1).

Dans le système de production aquaponique (2) de l'invention l'installation hydroponique (4) est préférentiellement prévue au-dessus du bassin d'aquaculture (3) de sorte que l'eau filtrée (6) par le dispositif de filtration (1) et servant à l'irrigation retourne par gravité dans le bassin d'aquaculture (3) après avoir nourri les plantes (13). Ainsi, un seul système de circulation d'eau comprenant une pompe (7) est nécessaire pour le système de production aquaponique (2) de l'invention afin d'aspirer l'eau souillée (5) du bassin, la filtrer à travers le dispositif de filtration (1) et la fournir à l'installation hydroponique (4) sous la forme d'une eau filtrée (6). En effet, l'eau filtrée (6) servant à l'irrigation retourne naturellement vers le bassin d'aquaculture (3) après que les plantes (13) aient prélevées les matières minérales nécessaires à leur croissance.

Le système de production aquaponique (2) de l'invention est préférentiellement abrité dans une serre ou un bâtiment (non représenté), cette serre ou ce bâtiment pouvant avantageusement être équipé(e) de panneaux solaires qui alimentent le système de circulation d'eau comprenant une pompe (7) en électricité pour aspirer l'eau souillée (5) du bassin d'aquaculture (3) à travers le dispositif de filtration (1) et la fournir à l'installation hydroponique (4) sous la forme d'eau filtrée (6). Ainsi, le système de production aquaponique (2) de l'invention constitue un système global et autonome qui fournit à la fois du poisson et des fruits et/ou des légumes.

Le système de production aquaponique (2) de l'invention, tout en étant peu onéreux, présente donc une longue durée de vie, est simple d'utilisation et d'entretien, nécessite une faible maintenance et est autonome en énergie, ce qui lui permet d'être parfaitement adapté au marché grand public.

Le dispositif de filtration (1) selon l'invention est prévu pour effectuer une filtration radiale, qui est très efficace en termes de débit et de qualité de filtration.

De manière générale, le corps (22) dudit dispositif de filtration (1) renferme une matière filtrante (23) prévue pour retenir les déchets solides (10), et le dispositif de filtration (1) comprend une alimentation (24) pour l'arrivée du liquide à filtrer, de préférence de l'eau souillée (5), et une évacuation (17) pour la sortie du liquide une fois celui-ci filtré, de préférence de l'eau filtrée (6).

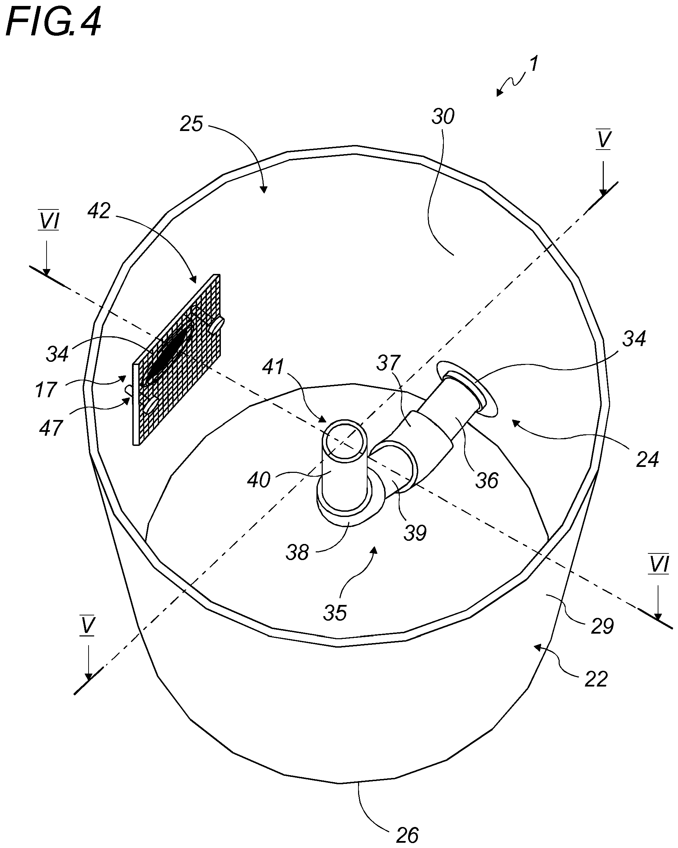

Comme cela apparaît clairement sur la figure 4, le corps (22) du dispositif de filtration (1) est sous la forme d'un cylindre creux à face supérieure (25) ouverte et à face inférieure (26) fermée formant le fond dudit corps cylindrique (22). Il présente préférentiellement une section circulaire.

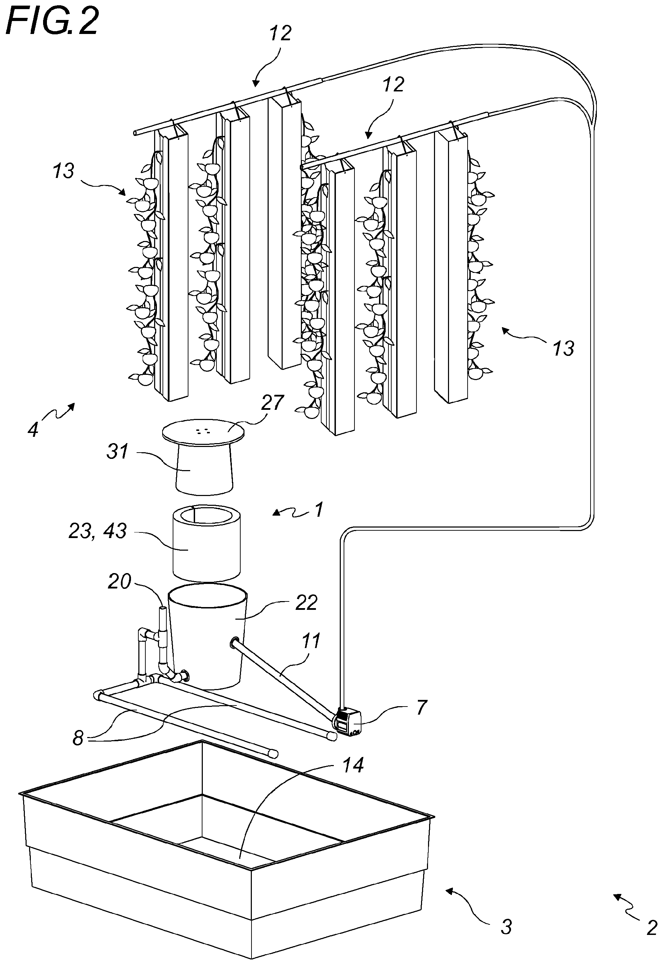

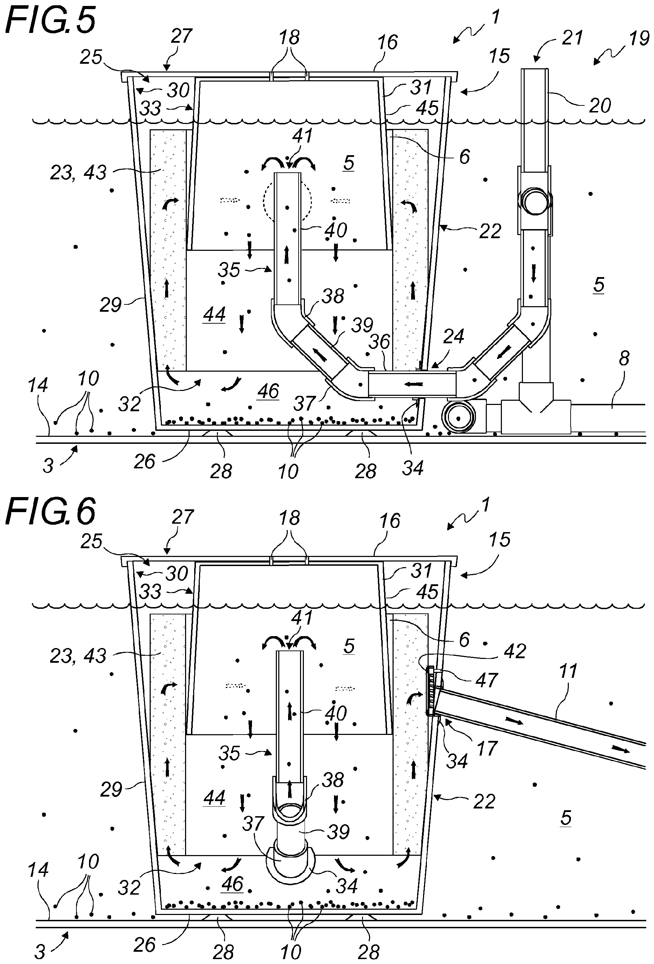

La face supérieure ouverte (25) du corps cylindrique (22) peut être fermée par un couvercle (27) tel que représenté sur les figure 3 et 5, mais celui-ci doit alors comporter un évent ou tout moyen similaire permettant de laisser passer l'air pour l'équilibre des pressions évoqué plus haut. Il peut par exemple s'agir de simples trous (18) percés dans le couvercle (27)

Afin de pouvoir être fixé rapidement et facilement de manière amovible au fond (14) du bassin d'aquaculture (3), le corps cylindrique (22) dudit dispositif de filtration (1) peut comporter des ventouses (28) sur sa face inférieure externe (26) et/ou sur sa face périphérique externe (29).

En effet, il peut être problématique que le dispositif de filtration (1) ne flotte dans le bassin d'aquaculture (3), aussi celui-ci est-il préférentiellement fixé dans le fond (14) dudit bassin d'aquaculture (3).

La matière filtrante (23) est sous la forme d'une masse de matière filtrante (43) logée dans le corps cylindrique (22) du dispositif de filtration (1) le long de la face périphérique interne (30) dudit corps cylindrique (22).

Un insert cylindrique (31) creux à face inférieure (32) ouverte est positionné de manière amovible dans le corps cylindrique (22) pour plaquer la matière filtrante (23) contre la face périphérique interne (30) dudit corps cylindrique (22) par sa face périphérique externe (33).

Cet insert cylindrique (31) doit pouvoir être retiré afin d'accéder à l'intérieur du corps cylindrique (22) pour pouvoir le nettoyer et assurer sa maintenance.

Dans le cas où le dispositif de filtration (1) est équipé en partie supérieure par un couvercle (27) monté de manière amovible sur la face supérieure ouverte (25) du corps cylindrique (22), l'insert cylindrique (31) creux est fixé en sous-face dudit couvercle (27). Cette fixation peut se faire par vissage, rivetage, collage, soudage ou par tout autre moyen connu. On peut également envisager que le couvercle (27) et l'insert cylindrique (31) creux soient fabriqués d'une seule pièce, par exemple par moulage.

L'alimentation (24) du dispositif de filtration (1) est prévue latéralement dans la partie inférieure du corps cylindrique (22). Elle est préférentiellement équipée d'un connecteur (34) rapide et étanche pour raccorder des conduites de manière amovible au dispositif de filtration (1), par exemple les conduites du réseau de conduites d'aspiration (8). Ce connecteur (34) peut être sous la forme d'une bague étanche en matière polymère élastique de type joint passe-cuve.

L'alimentation (24) est reliée à une conduite étanche (35), raccordée au réseau de conduites d'aspiration (8), et qui pénètre à l'intérieur du corps cylindrique (22) et de l'insert cylindrique (31) creux pour déboucher en partie supérieure (15) dudit corps cylindrique (22). Cette conduite étanche (35) présente préférentiellement une première partie (36) sensiblement horizontale raccordée de manière étanche au connecteur (34) rapide et étanche de l'alimentation (24). Elle comporte ensuite deux coudes à 45° (37, 38) espacés par une petite portion de conduite (39) de manière à ce que le second coude à 45° (38) débouche verticalement dans le corps cylindrique (22) de manière sensiblement centrée. Ce second coude (38) est alors raccordé à une conduite verticale (40), sensiblement centrée dans le corps cylindrique (22), et dont l'extrémité libre (41) débouche en partie supérieure (15) dudit corps cylindrique (22), préférentiellement sensiblement au niveau de l'évacuation (17) et au-dessous du niveau de l'eau dans le dispositif de filtration (1).

Les deux coudes successifs à 45° (37, 38) pourraient par exemple être remplacés par un coude à 90°, mais de manière générale dans l'invention, les coudes à 90° sont évités car ils sont susceptibles de se boucher et entraîner des pertes de charge plus importantes que les coudes présentant un angle inférieur.

L'évacuation (17) du dispositif de filtration (1) est prévue latéralement dans la partie médiane du corps cylindrique (22), par exemple sensiblement à mi-hauteur de celui-ci. Elle est préférentiellement équipée d'un connecteur (34) rapide et étanche similaire à celui de l'alimentation (24).

L'évacuation (17) est reliée à une conduite d'évacuation (11) étanche qui débouche en dehors du dispositif de filtration (1) afin d'être raccordée à un système de circulation d'eau comprenant une pompe (7), préférentiellement une pompe (7) d'aspiration immergée, qui alimente le dispositif d'irrigation (12) de l'installation hydroponique (4) en eau filtrée (6).

L'évacuation (17) peut également être équipée d'une grille (42) prévue entre la matière filtrante (23) et le corps cylindrique (22) afin d'éviter que la matière filtrante (23) ne soit aspirée à travers l'évacuation (17).

Cette grille (42) est préférentiellement maintenue à distance de la face périphérique interne du corps cylindrique (22) par un organe d'écartement (47), par exemple sous la forme d'une paire de tiges filetés équipées d'écrous, de sorte de permettre l'introduction de l'extrémité libre d'une conduite d'évacuation (11) à travers l'évacuation (17), cette distance protégeant la grille (42) contre toute détérioration éventuelle provenant de la présence ou de l'introduction de ladite conduite d'évacuation (11). La grille (42) est maintenue à une distance comprise entre 0,5 et 5 centimètres, préférentiellement comprise entre 1 et 4 centimètres et plus préférentiellement comprise entre 2 et 3 centimètres de la face périphérique interne du corps cylindrique (22).

La matière filtrante (23) est sous la forme d'une bande de masse de matière filtrante (43) qui est roulée sur elle-même sur un ou plusieurs tours de manière à former un cylindre.

La bande de masse de matière filtrante (43) présente une épaisseur comprise entre 0,5 et 20 centimètres, préférentiellement comprise entre 2 et 10 centimètres et plus préférentiellement comprise entre 4 et 6 centimètres.

Elle est préférentiellement située entre le niveau de l'eau dans le dispositif de filtration (1) et la conduite étanche (35). Elle affleure sensiblement avec le niveau de l'eau dans le dispositif de filtration (1) et repose en appui sur la première partie (36) sensiblement horizontale de la conduite étanche (35), laissant ainsi un volume libre (46) situé en dessous de l'insert cylindrique (31), de la conduite étanche (35) et de la matière filtrante (23) dans lequel les déchets solides (10) peuvent s'accumuler.

La matière filtrante (23) est préférentiellement de la mousse filtrante à maille fine, présentant par exemple une porosité de 30 PPI. Elle retient ainsi les déchets solides (10) mais laisse passer les nutriments nécessaires aux plantes (13) de l'installation hydroponique (4).

De manière générale, les matières utilisées pour le dispositif de filtration (1) et le système de production aquaponique (2) de l'invention sont en matériaux polymères compatibles avec un usage alimentaire.

Ainsi, la matière filtrante (23) et le bassin d'aquaculture (3) sont préférentiellement en polyéthylène haute densité (PEHD), les différentes conduites (8, 11, 35) et coudes (37, 38) sont des tubes préférentiellement en polychlorure de vinyle non plastifié (PVC-U) et le corps cylindrique (22) et l'insert sont préférentiellement en polypropylène.

Nous allons maintenant nous intéresser au fonctionnement de l'invention. En nous référant notamment aux figures 5 et 6 où les déchets organiques solides (10) sont représentés de manière schématique par de petites sphères noires et où le déplacement de l'eau est représenté par des flèches blanches.

L'eau souillée (5) est aspirée par la pompe (7) du système de circulation d'eau au niveau du réseau de conduites d'aspiration (8) perforées disposées dans le fond (14) du bassin d'aquaculture (3) pour traverser le dispositif de filtration (1) et être envoyée une fois filtrée dans l'installation hydroponique (4). L'eau souillée (5) arrive dans le dispositif de filtration (1) au niveau de l'alimentation (24) par la conduite étanche (35) qui pénètre à l'intérieur du corps cylindrique (22) et de l'insert cylindrique (31) creux pour déboucher en partie supérieure (15) dudit corps cylindrique (22). L'eau souillée (5) sort alors de cette conduite étanche (35) pour remplir le volume libre central (44) délimité par les parois périphériques (45) de l'insert cylindrique (31) creux et pour remplir le volume libre (46) situé en dessous de l'insert cylindrique (31) creux, dans le fond du corps cylindrique (22).

Aussi bien pendant le fonctionnement de la pompe (7) du système de circulation d'eau que pendant son arrêt, le niveau de liquide dans le corps cylindrique (22) du dispositif de filtration (1) reste sensiblement constant grâce au principe des vases communicants expliqué plus haut. La conduite étanche (35) est prévue pour déboucher au-dessous du niveau de liquide. En effet, les niveaux de liquide sont prévus de sorte que le niveau d'eau dans le dispositif de filtration (1) reste toujours au-dessus de l'évacuation (17) et que la pompe (7) du système de circulation d'eau n'aspire jamais à vide

Le contenu du dispositif de filtration (1) étant aspiré vers l'extérieur au niveau de l'évacuation (17), l'eau souillée (5) pénètre alors dans la matière filtrante (23). Celle-ci étant plaquée par la face périphérique externe (33) de l'insert cylindrique (31) creux, l'eau souillée (5) contourne l'insert cylindrique (31) creux par le dessous pour pénétrer dans la matière filtrante (23) au niveau de la partie inférieure de celle-ci. L'eau circule ainsi de manière radiale dans la matière filtrante (23). Elle traverse alors la matière filtrante (23), qui retient au passage les déchets organiques solides (10), et est aspirée au niveau de la conduite d'évacuation (11) qui alimente le dispositif d'irrigation (12) de l'installation hydroponique (4) en eau filtrée (6).

Lors des opérations de maintenance du dispositif de filtration (1), il suffit d'arrêter la pompe (7) du dispositif de circulation d'eau, de retirer l'insert cylindrique (31) creux et de retirer manuellement les déchets solides (10) présents au fond du corps cylindrique (22), par exemple au moyen d'une petite épuisette à aquarium ou au moyen d'un tuyau pour siphonner les matières solides, tandis que la matière filtrante (23) peut être sortie du dispositif de filtration (1) pour un nettoyage, par exemple effectué au jet d'eau ou au jet d'eau sous pression.

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente sans sortir du cadre de la présente invention et une étape décrite de mise en oeuvre du procédé peut être remplacée par une étape équivalente sans sortir du cadre de l'invention tel que défini par les revendications.

## Revendications

1. Dispositif de filtration (1) prévu pour être partiellement immergé dans un bassin (3) rempli de liquide afin de filtrer ce liquide (5) pour en éliminer les déchets solides (10), le corps dudit dispositif de filtration (1) renfermant une matière filtrante (23) prévue pour retenir les déchets solides (10), et ledit dispositif de filtration (1) comprenant une alimentation (24) pour l'arrivée du liquide (5) à filtrer et une évacuation (17) pour la sortie du liquide (6) une fois celui-ci filtré, **caractérisé en ce que** :
- le corps dudit dispositif de filtration (1) est sous la forme d'un cylindre creux (22) à face supérieure ouverte (25) et à face inférieure fermée (26) formant le fond dudit corps cylindrique (22) ;
- l'alimentation (24) est agencée latéralement dans la partie inférieure du corps cylindrique (22) ;
- l'évacuation (17) est agencée latéralement dans la partie médiane du corps cylindrique (22) ;
- un insert cylindrique (31) creux à face inférieure ouverte (32) est positionné de manière amovible dans le corps cylindrique (22) pour plaquer la matière filtrante (23) contre la face périphérique interne (30) dudit corps cylindrique (22) par la face périphérique externe (33) de l'insert cylindrique (31) ; et
- l'alimentation (24) est reliée à une conduite étanche (35) qui pénètre à l'intérieur du corps cylindrique (22) et de l'insert cylindrique (31) creux pour déboucher en partie supérieure dudit corps cylindrique (22).

2. Dispositif de filtration (1) selon la revendication 1, **caractérisé en ce que** l'évacuation (17) est équipée d'une grille (42) prévue entre la matière filtrante (23) et le corps cylindrique (22).

3. Dispositif de filtration (1) selon la revendication précédente, **caractérisé en ce qu'**il comprend un organe d'écartement (47) pour maintenir la grille (42) à distance de la face périphérique interne (30) du corps cylindrique (22).

4. Dispositif de filtration (1) selon l'une quelconque des revendications précédentes, **caractérisé en ce que** le corps cylindrique (22) dudit dispositif de filtration (1) est équipé en partie supérieure par un couvercle (27) monté de manière amovible sur la face supérieure ouverte (25) du corps cylindrique (22) et présentant au moins un évent, l'insert cylindrique (31) creux étant fixé en sous-face dudit couvercle (27).

5. Dispositif de filtration (1) selon l'une quelconque des revendications précédentes, **caractérisé en ce que** l'alimentation (24) et l'évacuation (17) sont équipées chacune d'un connecteur (34) rapide et étanche pour raccorder des conduites de manière amovible au dispositif de filtration (1).

6. Dispositif de filtration (1) selon l'une quelconque des revendications précédentes, **caractérisé en ce que** le corps cylindrique (22) comporte des ventouses (28) sur sa face inférieure fermée (26) et/ou sur sa face périphérique externe (29).

7. Dispositif de filtration (1) selon l'une quelconque des revendications précédentes, **caractérisé en ce que** la matière filtrante (23) est sous la forme d'une masse de matière filtrante (43) logée dans le corps cylindrique (22) du dispositif de filtration (1) le long de la face périphérique interne (30) dudit corps cylindrique (22).

8. Dispositif de filtration (1) selon la revendication précédente, **caractérisé en ce que** la matière filtrante (23) est sous la forme d'une bande de masse de matière filtrante (43) qui est roulée sur elle-même sur un ou plusieurs tours de manière à former un cylindre.

9. Dispositif de filtration (1) selon l'une quelconque la revendication précédente, **caractérisé en ce que** la bande de masse de matière filtrante (43) présente une épaisseur comprise entre 0,5 et 20 centimètres, préférentiellement comprise entre 2 et 10 centimètres et plus préférentiellement comprise entre 4 et 6 centimètres.

10. Dispositif de filtration (1) selon l'une quelconque des revendications précédentes, **caractérisé en ce que** la matière filtrante (23) est de la mousse filtrante à maille fine en polyéthylène haute densité (PEHD).

11. Système de production aquaponique (2) comprenant un bassin d'aquaculture (3) et une installation hydroponique (4), **caractérisé en ce qu'**il comprend au moins un dispositif de filtration (1) selon l'une quelconque des revendications précédentes prévu pour filtrer de l'eau souillée (5) du bassin d'aquaculture (3) et irriguer l'installation hydroponique (4) avec de l'eau filtrée (6) au moyen d'un système de circulation d'eau comprenant une pompe (7).

12. Système selon la revendication précédente, **caractérisé en ce que** le dispositif de filtration (1) est fixé et immergé au fond (14) du bassin d'aquaculture (3).

13. Système selon la revendication 11 ou 12, **caractérisé en ce que** le dispositif de filtration (1) est immergé dans le bassin d'aquaculture (3) de sorte que le niveau supérieur de l'eau dudit bassin d'aquaculture (3) maintenu situé entre la face supérieure ouverte (25) du corps cylindrique (22) et l'évacuation (17).

14. Système selon l'une quelconque des revendications 11 à 13, **caractérisé en ce qu'**il comporte un réseau de conduites d'aspiration (8) perforées disposées dans le fond (14) du bassin d'aquaculture (3) et raccordé à l'alimentation (24) du dispositif de filtration (1), les perforations (9) desdites conduites d'aspiration (8) étant de taille suffisante pour laisser passer les déchets solides (10) que le dispositif de filtration (1) doit retenir.

15. Système selon la revendication précédente, **caractérisé en ce que** le réseau de conduites d'aspiration (8) perforées est équipé d'une conduite verticale (20) en communication fluidique avec ledit réseau de conduites d'aspiration (8) perforées et dont l'extrémité libre (21) est ouverte et débouche au-dessus du niveau de l'eau du bassin d'aquaculture (3).

## Revendications modifiées

### Revendications modifiées conformément à la règle 137(2) CBE.

1. Dispositif de filtration (1) pour un système de production aquaponique et prévu pour être partiellement immergé dans un bassin (3) d'aquaculture rempli de liquide afin de filtrer ce liquide (5) pour en éliminer les déchets solides (10), le corps dudit dispositif de filtration (1) renfermant une matière filtrante (23) prévue pour retenir les déchets solides (10), et ledit dispositif de filtration (1) comprenant une alimentation (24) pour l'arrivée du liquide (5) à filtrer et une évacuation (17) pour la sortie du liquide (6) une fois celui-ci filtré, **caractérisé en ce que** :
- le corps dudit dispositif de filtration (1) est sous la forme d'un cylindre creux (22) en matière plastique compatible avec le contact alimentaire, à face supérieure ouverte (25) et à face inférieure fermée (26) formant le fond dudit corps cylindrique (22) ;
- la matière filtrante (23) comprend une masse de matière filtrante (43) logée le long de la face périphérique interne (30) du corps cylindrique (22) et présentant une épaisseur comprise entre 0,5 et 20 centimètres, préférentiellement comprise entre 2 et 10 centimètres et plus préférentiellement comprise entre 4 et 6 centimètres ;
- l'alimentation (24) est agencée latéralement dans la partie inférieure du corps cylindrique (22) ;
- l'évacuation (17) est agencée latéralement dans la partie médiane du corps cylindrique (22) ;
- un insert cylindrique (31) creux en matière plastique compatible avec le contact alimentaire, à face inférieure ouverte (32), est positionné de manière amovible dans le corps cylindrique (22) pour plaquer la matière filtrante (23) contre la face périphérique interne (30) dudit corps cylindrique (22) par la face périphérique externe (33) de l'insert cylindrique (31) et pour obliger l'eau souillée à contourner l'insert cylindrique creux par le dessous pour pénétrer dans la matière filtrante ; et
- l'alimentation (24) est reliée à une conduite étanche (35) qui pénètre à l'intérieur du corps cylindrique (22) et de l'insert cylindrique (31) creux pour déboucher en partie supérieure dudit corps cylindrique (22).

2. Dispositif de filtration (1) selon la revendication 1, **caractérisé en ce que** l'évacuation (17) est équipée d'une grille (42) prévue entre la matière filtrante (23) et le corps cylindrique (22).

3. Dispositif de filtration (1) selon la revendication précédente, **caractérisé en ce qu'**il comprend un organe d'écartement (47) pour maintenir la grille (42) à distance de la face périphérique interne (30) du corps cylindrique (22).

4. Dispositif de filtration (1) selon l'une quelconque des revendications précédentes, **caractérisé en ce que** le corps cylindrique (22) dudit dispositif de filtration (1) est équipé en partie supérieure par un couvercle (27) monté de manière amovible sur la face supérieure ouverte (25) du corps cylindrique (22) et présentant au moins un évent, l'insert cylindrique (31) creux étant fixé en sous-face dudit couvercle (27).

5. Dispositif de filtration (1) selon l'une quelconque des revendications précédentes, **caractérisé en ce que** l'alimentation (24) et l'évacuation (17) sont équipées chacune d'un connecteur (34) rapide et étanche pour raccorder des conduites de manière amovible au dispositif de filtration (1).

6. Dispositif de filtration (1) selon l'une quelconque des revendications précédentes, **caractérisé en ce que** le corps cylindrique (22) comporte des ventouses (28) sur sa face inférieure fermée (26) et/ou sur sa face périphérique externe (29).

7. Dispositif de filtration (1) selon l'une quelconque des revendications précédentes, **caractérisé en ce que** la matière filtrante (23) est sous la forme d'une bande de masse de matière filtrante (43) qui est roulée sur elle-même sur un ou plusieurs tours de manière à former un cylindre.

8. Dispositif de filtration (1) selon l'une quelconque des revendications précédentes, **caractérisé en ce que** la matière filtrante (23) est de la mousse filtrante à maille fine en polyéthylène haute densité (PEHD).

9. Système de production aquaponique (2) comprenant un bassin d'aquaculture (3) et une installation hydroponique (4), **caractérisé en ce qu'**il comprend au moins un dispositif de filtration (1) selon l'une quelconque des revendications précédentes prévu pour filtrer de l'eau souillée (5) du bassin d'aquaculture (3) et irriguer l'installation hydroponique (4) avec de l'eau filtrée (6) au moyen d'un système de circulation d'eau comprenant une pompe (7).

10. Système selon la revendication précédente, **caractérisé en ce que** le dispositif de filtration (1) est fixé et immergé au fond (14) du bassin d'aquaculture (3).

11. Système selon la revendication 9 ou 10, **caractérisé en ce que** le dispositif de filtration (1) est immergé dans le bassin d'aquaculture (3) de sorte que le niveau supérieur de l'eau dudit bassin d'aquaculture (3) maintenu situé entre la face supérieure ouverte (25) du corps cylindrique (22) et l'évacuation (17).

12. Système selon l'une quelconque des revendications 9 à 11, **caractérisé en ce qu'**il comporte un réseau de conduites d'aspiration (8) perforées disposées dans le fond (14) du bassin d'aquaculture (3) et raccordé à l'alimentation (24) du dispositif de filtration (1), les perforations (9) desdites conduites d'aspiration (8) étant de taille suffisante pour laisser passer les déchets solides (10) que le dispositif de filtration (1) doit retenir.

13. Système selon la revendication précédente, **caractérisé en ce que** le réseau de conduites d'aspiration (8) perforées est équipé d'une conduite verticale (20) en communication fluidique avec ledit réseau de conduites d'aspiration (8) perforées et dont l'extrémité libre (21) est ouverte et débouche au-dessus du niveau de l'eau du bassin d'aquaculture (3).
